# EUROPEAN PATENT APPLICATION

(11) **EP 3 907 085 A1**
(43) Date of publication of application: **10.11.2021**
(21) Application number: 20199099.1
(22) Date of filing: 29.09.2020
(51) Int. Cl.: B44C 5/00

(54) **ROTARY HYDRODYNAMIC HANDICRAFT AND THE PADDLING METHOD THEREOF**

(30) Priority: 06.05.2020 CN 202010374173
(71) Applicant: Huizhou WeiDuoLi Technology Co., Ltd., Huizhou, Guangdong (CN)
(72) Inventor: Liu, Hesheng, Huizhou, Guangdong (CN)
(74) Representative: Cabinet Chaillot

(57) **Abstract**

The invention discloses a rotary hydrodynamic handicraft and the paddling method thereof wherein the handicraft comprises a water sealing chassis with motor provided at outer-bottom thereof, double magnets arranged on motor; in the water sealing chassis is arranged with an impeller with double magnets arranged thereon, double magnets on impeller and that on motor repelling each other; a storage support frame is fixed in water sealing chassis with bearing arranged thereon, on bearing provided with a rotating ring body, interior trimming articles arranged thereon; the paddling method is: the impeller in water driven by the motor, the impeller rotates via rotation of motor; rotation of the impeller enables water possesses driving force and rotating impeller drives water to circularly flow in one direction, thereby the flowing water has driving force to push bearing, the rotating ring body and interior trimming article to float and rotate in specific direction and angle.

## Description

### BACKGROUND OF THE INVENTION

### 1. Field of the Invention

The invention relates to the technical field of the handicraft, specifically relating to a rotary hydrodynamic handicraft and the paddling method thereof.

### 2. Description of the Related Art

At present, rotation of the interior trimming of handicraft is generally realized via two approaches: the first one is that the motor directly drives the placing member for placing the interior trim to rotate and the second one is that the magnetic force drives the placing member for placing the interior trim to rotate; in both of the two kinds of approaches, rotation of the placing member is directly driven by external force. However, the way of directly driving the placing member to rotate for paddling is monotonous in impression and poor in its application scene. Meanwhile, some other problem also exist in the motor directly driving the placing member to rotate in that the transmission shaft of the motor needs to penetrate through the container, due to the poor water tightness of the transmission shaft, liquid leakage is prone to occur and electronic device in handicraft such as the motor and lamp is easy to damage.

### SUMMARY OF THE INVENTION

The invention aims to solve problems proposed in said background of the invention and provides a rotary hydrodynamic handicraft and the paddling method thereof; the landscape effect in the rotating process is desired and leaves an impression of floating on water on people, much greater experience feeling than that provided by rotating of the rotating ring body directly driven by traditional external force.

The invention adopts following technical plan to solve the technical problem: a rotary hydrodynamic handicraft comprising a water sealing chassis with a motor provided at the outer-bottom thereof, double magnets arranged on the motor; in the water sealing chassis is arranged with an impeller with double magnets arranged thereon, the double magnets on the impeller and the double magnets on the motor repelling each other; a storage support frame is fixed in the water sealing chassis with a bearing arranged thereon and on the bearing is provided with a rotating ring body to reduce resistance and keep overall balance, interior trimming articles arranged thereon;

To be further specific, in said technical plan, an arc-shaped guide ring is arranged on said storage support frame to restrain the rotating direction and angle of the rotating ring body; said rotating ring body comprises a rotating outer ring and an rotating inner ring wherein the rotating inner ring of the rotating ring body is fixedly connected with the outer ring of the bearing.

To be further specific, in said technical plan, a plurality of rotating blades are provided uniformly at the bottom of the rotating outer ring of said rotating ring body and said rotating blades are arranged in the water of the water sealing chassis.

To be further specific, in said technical plan, said water sealing chassis comprises a water sealing inner ring and water sealing outer ring wherein a liner is arranged on the upper cover of said water sealing inner ring of said water sealing chassis and the space formed by assembling the water sealing inner ring of the water sealing chassis and the liner is filled with water; a transparent outer cover is arranged on the upper cover of the water sealing outer ring of said water sealing chassis and interior trimming articles are filled in the space formed by assembling the water sealing outer ring of the water sealing chassis and the transparent outer cover.

To be further specific, in said technical plan, said liner is screwed on the water sealing inner ring of the water sealing chassis via a thread, and said transparent outer cover is fastened on the water sealing outer ring of the water sealing chassis via buckles.

To be further specific, in said technical plan, a plurality of mounting holes are formed in the bottom and other angles of the water sealing chassis wherein said mounting holes are located on the inner side of the water sealing inner ring of the water sealing chassis; a plurality of supporting legs are arranged at the bottom and other angles of said storage support frame; the supporting legs are inserted into the mounting holes in a matched mode to realize assembly of the storage support frame and the water sealing chassis.

To be further specific, in said technical plan, said arc-shaped guide ring and storage support frame are an integral structure.

To be further specific, in said technical plan, on the top of said storage support frame is the bearing mount for installing the bearing.

To be further specific, in said technical plan, the included angle between the blade of the impeller and the horizontal plane is 45° ∼ 60°.

A paddling method of a rotary hydrodynamic handicraft wherein the impeller in the water driven by the motor, the impeller rotates via rotation of the motor; rotation of the impeller enables water possesses driving force and the rotating impeller drives the water in the water sealing chassis to circularly flow in one direction, thereby the flowing water has the driving force to push the bearing, the rotating ring body and the interior trimming article float and rotate in specific rotating direction and angle.

The beneficial effects of the invention are: the invention provides a rotary hydrodynamic handicraft and the paddling method thereof wherein the handicraft has the advantages of small size, small space, flexible design, silence, high yield of good products, low cost and the like; various interior trimming articles are placed on the rotating ring body which is driven to rotate through the power of water, the interior trimming articles naturally rotating along with the rotating ring body; the landscape effect in the rotating process is desired and leaves an impression of floating on water on people, much greater experience feeling than that provided by rotating of the rotating ring body directly driven by traditional external force.

### BRIEF DESCRIPTION OF THE DRAWINGS

In order to more clearly illustrate the embodiments or technical plan of the invention, the drawings used in the description of the embodiments or the prior art will be briefly introduced hereinafter, it is obvious that the drawings in the description below are only some embodiments described in the application, and for those skilled in the art, other drawings can be obtained according to the drawings without creative efforts.
FIG.1 is one of the structural diagram of the invention;
FIG.2 is another structural diagram of the invention;
FIG.3 is the breakdown structure diagram of FIG.1.

The reference numbers of the drawings are: 1. Water sealing chassis; 101. Water sealing inner ring; 102. Water sealing outer ring; 103. Mounting hole; 104. Motor mount; 1041. Cylindrical body; 1042. Elastic claw; 2. Motor; 3. Impeller; 4. Storage support frame; 401. Supporting leg; 402. Bearing mount; 5. Bearing; 6. Rotating ring body; 601. Rotating outer ring; 602. Rotating blade; 7. Arc-shaped guide ring.

### DETAILED DESCRIPTION OF THE PREFERRED EMBODIMENTS

To more clearly illustrate the purpose, technical plan and advantages of the invention, the invention is further described in detail hereinafter with reference to the drawings. only part of embodiments of the invention is shown in the drawings, and the actual structure is not limited thereto. In general, it is to be understood by those skilled in the art that non-creative design of structural forms and embodiments that are similar to the technical solutions without departing from the spirit of the invention shall all fall within the protective scope of the invention.

In the description of the invention, it is to be understood that directions or locations indicated by the terms: "one side", "the other side", "both sides", "between", "middle", "upper end", "lower end" are based on the directions or locations of the drawings with the aim of describing the invention and simplifying description thereof, without indicating that the devices or elements referred to be in specific directions or be constructed and operated in specific directions, thereby it can not be taken as limitations to the invention.

In the description of the invention, it should be noted that, unless explicitly stated or limited otherwise, the terms "arranged" and "connected" are to be interpreted broadly, e.g., as being fixedly or detachably or integrally connected; may be directly connected or indirectly connected via an intermediate. The specific meanings of the above terms in the invention can be understood in a specific case to those skilled in the art.

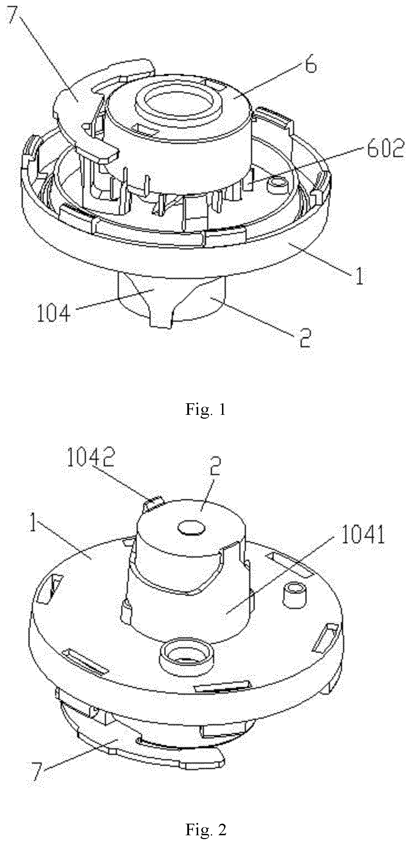

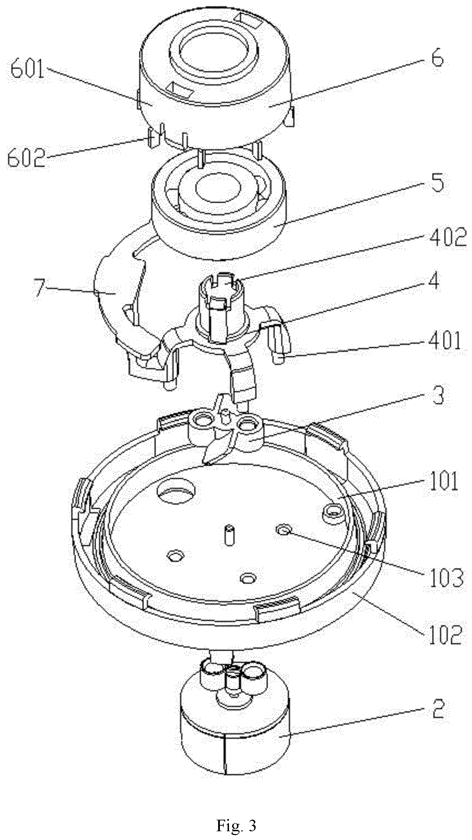

As seen in FIG. 1-3, the invention provides a rotary hydrodynamic handicraft comprising a water sealing chassis 1 with a motor 2 provided at the outer-bottom thereof, double magnets arranged on the motor 2; in the water sealing chassis is arranged with an impeller 3 with double magnets arranged thereon, the double magnets on the impeller 3 and the double magnets on the motor 2 repelling each other; a storage support frame 4 is fixed in the water sealing chassis 1 with a bearing 5 arranged thereon and on the bearing 5 is provided with a rotating ring body 6 to reduce resistance and keep overall balance, interior trimming articles arranged thereon.

An arc-shaped guide ring 7 is arranged on said storage support frame 4 to restrain the rotating direction and angle of the rotating ring body 6 wherein said arc-shaped guide ring 7 and storage support frame 4 are an integral structure which means that the arc-shaped guide ring 7 and storage support frame 4 are formed together.

The included angle between the blade of the impeller 3 and the horizontal plane is 45° ∼ 60° and increasing the contact area between the blade of the impeller 3 and the water will further effectively guarantee that the impeller 3 drives the water flowing rapidly.

The rotating ring body 6 comprises a rotating outer ring 601 and an rotating inner ring wherein the rotating inner ring of the rotating ring body is fixedly connected with the outer ring of the bearing 5. A plurality of rotating blades 602 are provided uniformly at the bottom of the rotating outer ring 601 of said rotating ring body 6 and the rotating blades 602 are arranged in the water of the water sealing chassis 1. When water flows under the rotation of the impeller 3, the flowing water pushes a plurality of rotating blades 602 in the water, so as to push the rotating ring body 6 with the rotating blades 602 to rotate along the flowing direction of the water; in addition, because the rotating blades 602 on the rotating ring body 6 are arranged in the water, the rotating ring body 6 rotates in a floating way along with the flowing and fluctuating directions of the water, so that the impression and experience leaved on users are enhanced. The width direction of the rotating blade 602 is perpendicular to the power direction of water, increasing the contact surface between the rotating blade 602 and the power of water can further guarantee the rotating ring body 6 to rotate quickly and, meanwhile, saving the power of the water, thus reducing the energy consumption.

The water sealing chassis 1 comprises a water sealing inner ring 101 and a water sealing outer ring 102 wherein a liner is arranged on the upper cover of the water sealing inner ring 101 of said water sealing chassis 1 wherein the liner can be made either of transparent materials or of opaque materials. The space formed by assembling the water sealing inner ring 101 of the water sealing chassis 1 and the liner is filled with water; a transparent outer cover is arranged on the upper cover of the water sealing outer ring 102 of said water sealing chassis 1 and interior trimming articles are filled in the space formed by assembling the water sealing outer ring 102 of the water sealing chassis 1 and the transparent outer cover.

The liner is screwed on the water sealing inner ring 101 of the water sealing chassis 1 via a thread, and a rubber sealing ring can be additionally arranged at the assembly position of the liner and the water sealing inner ring 101 in order to increase the assembly sealing performance of the liner and the water sealing inner ring 101.

At the bottom of the outer portion of the water sealing chassis 1 is arranged with the motor mount 104 which comprises a cylindrical body for mounting the motor 2 and two elastic claws 1042 for tightly holding the motor 2 wherein the two elastic claws 1042 are symmetrically distributed; when the motor 2 needs to be mounted on the motor mount 104, firstly, the two elastic claws 1042 are opened by hands, then the motor 2 is plugged into the cylindrical body 1041, then the hands are removed from the two elastic claws 1042 and the two elastic claws 1042 restore to the original positions due to their own elastic action, further tightly holding the bottom of the motor 2 in the cylindrical body 1041, thus effectively preventing the motor 2 from falling off the motor mount 104 and guaranteeing the mounting stability of the motor 2.

The transparent outer cover is fastened on the water sealing outer ring 102 of the water sealing chassis 1 via buckles wherein there are a plurality of buckles which evenly arranged on the circumferencial direction of water sealing outer ring 102; a plurality of buckles, the water sealing outer ring 102, water sealing inner ring 101 and the motor mount 104 are an integral structure which means that a plurality of buckles, the water sealing outer ring 102, water sealing inner ring 101 and the motor mount 104 are formed together; a plurality of buckles are also provided on the transparent outer cover.

A plurality of mounting holes 103 are formed in the bottom and other angles of the water sealing chassis 1 wherein the mounting holes 103 are located on the inner side of the water sealing inner ring 101 of the water sealing chassis 1; a plurality of supporting legs 401 are arranged at the bottom and other angles of the storage support frame 4; the supporting legs are inserted into the mounting holes 103 in a matched mode to realize assembly of the storage support frame 4 and the water sealing chassis 1. Specifically, three mounting holes 103 are formed in the bottom and other angles of the water sealing chassis 1 and three supporting legs 401 are arranged at the bottom and other angles of the storage support frame 4.

On the top of the storage support frame 4 is the bearing mount 402 for installing the bearing 5. The supporting legs 401 and the bearing mount 402 are an integral structure which means that the supporting legs 401 and the bearing mount 402 are formed together.

A paddling method of a rotary hydrodynamic handicraft wherein the rotating ring body 6 rotates in a floating way driven by the power of water and the power of water is realized by the impeller 3 arranged in the water sealing chassis 1; to be specific, the impeller 3 in the water driven by the motor 2, the impeller 3 rotates via rotation of the motor 2; rotation of the impeller 3 enables water possesses driving force and the rotating impeller 3 drives the water in the water sealing chassis 1 to circularly flow in one direction, thereby the flowing water has the driving force to push the bearing 5, the rotating ring body 6 and the interior trimming articles thereof to float and rotate in specific rotating direction and angle; the landscape effect in the rotating process is desired and leaves an impression of floating on water on people.

It should be noted that: the double-magnet impeller 3 in the container is driven by the double-magnet motor 2 outside the container to rotate, so that water circularly flows in one direction in the container, the flowing of the water can push the rotating ring body 6 to naturally rotate, and then the rotating ring body 6 is provided with desired interior trimming articles; considering the middle of the bearing 5 is fixed, the rotating ring body 6 can rotate, and arranging the desired interior trimming articles, it is a revolutionary breakthrough in the handicraft industry and good to watch. It is quite silent due to the hydrodynamic force. Despite the fact that the ornamental structures with the middle part not rotating and the side part rotating once existed in the market, given the ornamental structures are driven by gears, such ornamental structures have problems of sound, high reject ratio, high cost and poor flexibility.

The traditional handicraft adopts a motor and a transmission shaft to drive water flow, which has complex craft process and the use of a 3A battery can only lasts about 12 hours. The invention adopts the impeller 3 for driving water to flow, then the power generated by the water is used to drive the bearing. The 3A battery can be used for about 48 hours, so that the energy is saved, the environment is protected, and the loss is reduced.

The invention and its embodiments have been described above, but the description is not limited thereto; only one embodiment of the invention is shown in the drawings, and the actual structure is not limited thereto. In general, it is to be understood by those skilled in the art that non-creative design of structural forms and embodiments that are similar to the technical solutions without departing from the spirit of the invention shall all fall within the protective scope of the invention.

## Claims

1. A rotary hydrodynamic handicraft comprising a water sealing chassis (1) with a motor (2) provided at the outer-bottom thereof, double magnets arranged on the motor (2); in the water sealing chassis (1) is arranged with an impeller (3) with double magnets arranged thereon, the double magnets on the impeller (3) and the double magnets on the motor (2) repelling each other; a storage support frame (4) is fixed in the water sealing chassis(1) with a bearing (5) arranged thereon and on the bearing (5) is provided with a rotating ring body (6) to reduce resistance and keep overall balance, interior trimming articles arranged thereon.

2. The rotary hydrodynamic handicraft of claim 1 wherein an arc-shaped guide ring (7) is arranged on said storage support frame (4) to restrain the rotating direction and angle of the rotating ring body (6); said rotating ring body (6) comprises a rotating outer ring (601) and an rotating inner ring wherein the rotating inner ring of the rotating ring body (6) is fixedly connected with the outer ring of the bearing (5).

3. The rotary hydrodynamic handicraft of claim 2 wherein a plurality of rotating blades (602) are provided uniformly at the bottom of the rotating outer ring (601) of said rotating ring body (6) and said rotating blades (602) are arranged in the water of the water sealing chassis (1).

4. The rotary hydrodynamic handicraft of claim 1 wherein said water sealing chassis (1) comprises a water sealing inner ring (101) and a water sealing outer ring (102) wherein a liner is arranged on the upper cover of said water sealing inner ring (101) of said water sealing chassis (1) and the space formed by assembling the water sealing inner ring (101) of the water sealing chassis (1) and the liner is filled with water; a transparent outer cover is arranged on the upper cover of the water sealing outer ring (102) of said water sealing chassis (1) and interior trimming articles are filled in the space formed by assembling the water sealing outer ring (102) of the water sealing chassis (1) and the transparent outer cover.

5. The rotary hydrodynamic handicraft of claim 4 wherein said liner is screwed on the water sealing inner ring (101) of the water sealing chassis (1) via a thread, and said transparent outer cover is fastened on the water sealing outer ring (102) of the water sealing chassis (1) via buckles.

6. The rotary hydrodynamic handicraft of claim 4 wherein a plurality of mounting holes (103) are formed in the bottom and other angles of the water sealing chassis (1) wherein said mounting holes (103) are located on the inner side of the water sealing inner ring (101) of the water sealing chassis (1); a plurality of supporting legs (401) are arranged at the bottom and other angles of said storage support frame (4); the supporting legs (401) are inserted into the mounting holes (103) in a matched mode to realize assembly of the storage support frame (4) and the water sealing chassis (1).

7. The rotary hydrodynamic handicraft of claim 1 wherein said arc-shaped guide ring (7) and storage support frame (4) are an integral structure.

8. The rotary hydrodynamic handicraft of claim 1 wherein on the top of said storage support frame (4) is the bearing mount (402) for installing the bearing (4).

9. The rotary hydrodynamic handicraft of claim 1 wherein the included angle between the blade of the impeller (3) and the horizontal plane is 45° ∼ 60°.

10. A paddling method of a rotary hydrodynamic handicraft of claim 1 wherein the impeller (3) in the water driven by the motor (2), the impeller (3) rotates via rotation of the motor (2); rotation of the impeller (3) enables water possesses driving force and the rotating impeller (3) drives the water in the water sealing chassis (1) to circularly flow in one direction, thereby the flowing water has the driving force to push the bearing (5), the rotating ring body (6) and the interior trimming article thereof float and rotate in specific rotating direction and angle.
